# EUROPÄISCHE PATENTANMELDUNG

(11) **EP 0 827 768 A1**
(43) Veröffentlichungstag der Anmeldung: **11.03.1998**
(21) Anmeldenummer: 97113694.0
(22) Anmeldetag: 07.08.1997
(51) Int. Cl.: B01D 29/37

(54) **Vorrichtung und Verfahren zum Filtern von Suspensionen**

(30) Priorität: 06.09.1996 DE 19636254
(71) Anmelder: Premark FEG L.L.C., Wilmington, Delaware 19801 (US)
(72) Erfinder: Truetsch, Claus, 77933 Lahr (DE)
(74) Vertreter: Füchsle, Klaus, Dipl.-Ing.

(57) **Zusammenfassung**

Eine Filtervorrichtung (10; 100) für Suspensionen dient insbesondere zum Entwässern von wässerigen oder pastösen Nahrungsmittelabfällen. Die Filtervorrichtung umfaßt eine Filtereinrichtung (11) mit einem Filtermantel (12) mit Flüssigkeitsdurchtrittsöffnungen und einer Eintrittsöffnung (44) für die zu behandelnde Suspension. Eine Austrittsöffnung (25) für feste Filterrückstände ist mit einem geeigneten Entsorgungsbehälter verbunden. Zusätzlich ist der Filtermantel von einem geschlossenen Außenmantel (14) umgeben, der mit einem Flüssigkeitsaustritt (46) versehen ist. Beim Betrieb der Vorrichtung wird Suspension in den Filterraum (24) eingeführt, und die Flüssigkeit aus dem Ringraum (22) abgeführt. Absatzweise wird die Austrittsöffnung (25) geöffnet und die Filterrückstände aus dem Filterraum (24) entleert.

## Beschreibung

### Technisches Gebiet

Die Erfindung betrifft eine Filtervorrichtung für Suspensionen, insbesondere zum Entwässern von wässerigen oder pastösen Nahrungsmittelabfällen, sowie ein Verfahren zum Entwässern von Suspensionen in einer Filtervorrichtung.

Bei der Nahrungsmittelherstellung, in Großküchen, aber auch in Haushaltsküchen, entstehen Speisereste, die insbesondere in Großküchen in wässeriger Phase in Suspensionsbehältern gesammelt werden. Um die Entsorgungskosten gering zu halten, ist man bestrebt, die Nahrungsmittelabfälle zu entwässern, um damit sowohl das Gewicht wie auch das Volumen der Abfälle zu verringern. In Großküchen werden die Nahrungsmittelabfälle meist in geeigneten Zerkleinerungsvorrichtungen, sogenannten Pulpern, zerhäckselt und mit Hilfe von Wasser zu einem Lagerungsbehälter gefördert. Der Lagerungsbehälter stellt einen Puffer dar und gleicht einen diskontinuierlichen An- und Abtransport der wässerigen Nahrungsmittelreste aus. Hierdurch wird ein kontinuierlicher oder quasi-kontinuierlicher Betrieb einer nachgeschalteten Entwässerungsvorrichtung möglich.

### Stand der Technik

In der Technik sind eine Vielzahl verschiedener, derartiger Entwässerungseinrichtungen bekannt. Am häufigsten werden Siebschnecken verwendet, die sowohl eine Entwässerung als auch Komprimierung der Speisereste erlauben. Die aus Wasser und den festen oder pastösen Nahrungsmittelresten bestehende Suspension wird in den Bereich einer wendelförmig ausgebildeten Siebschnecke gebracht, die üblicherweise mit einem Sieb ganz oder bereichsweise umgeben ist und die festen Bestandteile des Nahrungsmittelabfalls zum einen entwässern und zum anderen in Richtung einer nachgeschalteten Entsorgungs- oder Weiterbehandlungsvorrichtung fördern. Der Nachteil der Entwässerungsvorrichtung in Form einer Siebschnecke liegt darin, daß diese zum einen eine Anzahl von beweglichen Teilen besitzt und zudem insbesondere die wendelförmig ausgebildete Schnecke teuer in der Fertigung ist. Zusätzlich besitzen Siebschnecken-Entwässerungsvorrichtungen einen relativ hohen Platzbedarf.

Filtervorrichtungen, bestehend aus Filterkerzen mit einem geeigneten Filterüberzug, eignen sich nur zur Feinreinigung gering verschmutzter Flüssigkeiten, weil bei einer hohen Beladung mit suspendierten Feststoffteilchen jeweils bereits nach sehr kurzer Betriebsdauer die Filterüberzüge von einem Filterkuchen bedeckt sind, der den Durchtritt der zu filtrierenden Flüssigkeit stark behindert.

Die deutsche Offenlegungsschrift 42 02 326 beschreibt eine Abwasser-Recycling-Anlage mit einer Filtervorrichtung. Diese umfaßt einen Entwässerer zur Behandlung von Abfällen aus Großküchen. Der zugeführte Abfall wird zwischen Preß- und Wasserquetschwalzen durch Transportrollen gefördert und in kleine Stücke zerkleinert. Anschließend werden die zerkleinerten und bereits entwässerten festen Bestandteile des Abfalls durch einen Walzengurtförderer zu einem Eingabetrichter eines Entwässerungsabschnittes gebracht, in dem das Abwasser durch Druckbeaufschlagung einer Presse ausgepreßt wird. Im Bodenbereich des Entwässerungsabschnittes befinden sich Ausflußöffnungen, durch die das abgereinigte Wasser hindurchtritt. Nach dem Kompaktieren werden die Feststoffe einem Feststoffbehandlungstank zugeführt.

### Darstellung der Erfindung

Es ist das der Erfindung zugrundeliegende Problem (Aufgabe), eine Filtervorrichtung sowie ein Verfahren zum Entwässern von Suspensionen, insbesondere von wässerigen oder pastösen Nahrungsmittelabfällen, vorzuschlagen, die einfach und kostengünstig herzustellen ist und ein einfach durchzuführendes Entwässerungsverfahren gestattet.

Diese Aufgabe wird durch eine Filtervorrichtung mit den Merkmalen des Anspruchs 1 sowie ein Entwässerungsverfahren mit den Merkmalen des Patentanspruchs 12 gelöst.

Der Erfindung liegt der Gedanke zugrunde, eine sowohl baulich als auch betrieblich möglichst einfache Filtervorrichtung zu schaffen, die Gesamtküchenabwässer vorreinigt. Die erfindungsgemäße Vorrichtung stellt eine Kombination aus einer Filtervorrichtung und einem Absetzbecken dar, wodurch insbesondere auch pastöse Nahrungsmittelabfälle, deren Dichte größer als die des Wassers ist, sich in der Filtereinrichtung absetzen können.

Vorteilhafte Ausführungsformen sind durch die übrigen Ansprüche gekennzeichnet.

So ist nach einer bevorzugten Ausführungsform die Austrittsöffnung für feste Filterrückstände mit einem betätigbaren Ventil verschließbar. Hierdurch läßt sich zum einen der absatzweise Betrieb der Filtervorrichtung gezielt steuern und zum anderen auch der unter der Austrittsöffnung für feste Filterrückstände angeordnete Abfallbehälter oder die darunter angeordneten Abfallsäcke während des Betriebs der Filtervorrichtung auswechseln.

Vorteilhafterweise ist das Ventil als pneumatisch betätigbares Schieberventil ausgeführt. Der Vorteil eines pneumatisch betätigten Ventils liegt darin, daß das Öffnen und Schließen sehr schnell erfolgen kann. Hierdurch läßt sich nach einer Druckerhöhung in der Filtereinrichtung der Ausstoß der festen Filterrückstände sehr schnell durchführen.

Nach einer weiteren, bevorzugten Ausführungsform ist der Filtermantel im wesentlichen zylindermantelförmig ausgebildet und in Form eines Spaltsiebes oder Schlitzsiebes gestaltet. Während die zylindermantelförmige Geometrie fertigungstechnische Vorteile mit sich bringt, ist die gesamte Ausführung des Filtermantels als Spaltsieb oder Schlitzsieb vorteilhaft, weil im Vergleich zur sehr hohen freien Querschnittsfläche für den Durchtritt der Flüssigkeit sich ein sehr enger Durchtrittsquerschnitt für die Feststoffpartikel ausgestalten läßt. Unter der Annahme von im wesentlichen kugelförmigen, abzutrennenden Feststoffpartikeln läßt sich somit durch die Ausgestaltung der Sieböffnungen als Spalten oder Schlitze eine sehr gute Abscheidewirkung erzielen.

Für die Vorreinigung von Gesamtküchenabwässern hat es sich als vorteilhaft erwiesen, einen geringsten Öffnungsquerschnitt von 0,25 mm bis 0,5 mm und vorzugsweise von etwa 0,4 mm im Spaltsieb oder Schlitzsieb des Filtermantels vorzusehen. In gleicher Weise kann ein Lochsieb verwendet werden, wobei der geringste Öffnungsquerschnitt in diesem Fall dem Lochdurchmesser entspricht.

Nach einer bevorzugten Ausführungsform besitzen die Flüssigkeitsdurchtrittsöffnungen auf der Innenfläche des als geschlossener Körper geformten Filtermantels einen geringeren Öffnungsquerschnitt als auf der Außenfläche des Filtermantels. Dies besitzt den Vorteil, daß beim Entleeren des Behälters (des mit abzutrennenden Nahrungsmittelresten angefüllten Filtermantels) unter Einblasen von Druckluft in den Filtermantel eine stark reduzierte Menge an Feststoffpartikeln in den Außenmantel der Filtervorrichtung durch das Sieb gedrückt werden.

Vorteilhafterweise weist die Filtereinrichtung hierzu einen Einlaß für Druckluft und/oder einen Einlaß für Reinigungsflüssigkeit auf. Während die Druckluft für das Entleeren des Filtermantels im zyklischen Betrieb eingesetzt wird, dient der Einlaß für Reinigungsflüssigkeit speziellen, turnusgemäßen Reinigungsaufgaben, die bevorzugt mit warmem Wasser, dosiert mit Reinigungsflüssigkeiten oder auch zusätzlich Desinfizier- oder Desodorierflüssigkeiten, ausgeführt werden.

Nach einer bevorzugten Ausführungsform ist die Eintrittsöffnung für die zu behandelnde Suspension mit einer Zufuhrleitung verbunden, in der eine Pumpe angeordnet ist. Durch die Pumpe läßt sich die zu behandelnde Suspension mit einem vorgegebenen Druck in die Filtereinrichtung einleiten. Zusätzlich kann während des Entleerens oder, in einer anderen Ausführungsform, des vorhergehenden Komprimierens der Abfälle im Siebmantel, die Pumpe angehalten werden und somit das Fördern der zu behandelnden Suspension in die Filtereinrichtung unterbrochen werden.

Gemäß einer weiteren bevorzugten Ausgestaltung der Erfindung ist eine mechanische Verdichtungseinrichtung in dem vom Filtermantel umschlossenen Raum bewegbar angeordnet. Hierdurch läßt sich eine sehr starke Verdichtung und somit Entwässerung der Nahrungsmittelabfälle erzielen. Vorzugsweise umfaßt die mechanische Verdichtungseinrichtung einen pneumatischen Preßkolben.

Vorzugsweise ist die Filtereinrichtung mit einem abnehmbaren Deckel verschließbar. Dies gestattet einen schnellen Zugang zur Filtereinrichtung, wodurch sich servicebedingte Aufgaben mit möglichst geringen Stillstandzeiten der Filtervorrichtung bewältigen lassen.

### Kurze Beschreibung der Zeichnungen

Nachfolgend wird die Erfindung rein beispielhaft anhand der beigefügten Figuren beschrieben, in denen:
- Fig. 1: eine schematische Ansicht einer ersten Ausführungsform der Filtervorrichtung in teilweisem Querschnitt darstellt;
- Fig. 1A: eine Ansicht in teilweisem Aufbruch in Pfeilrichtung X in Fig. 1 zeigt;
- Fig. 1B: die Detailansicht Y in Fig. 1A darstellt; und
- Fig. 2: die schematische Ansicht der Filtervorrichtung gemäß einer weiteren Ausführungsform in teilweiser Schnittdarstellung darstellt.

### Wege zur Ausführung der Erfindung

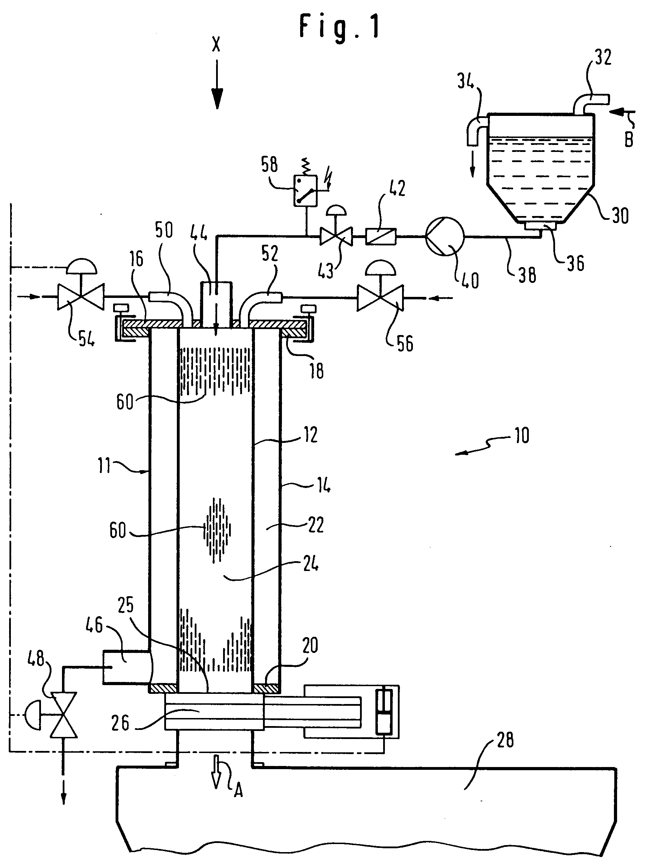

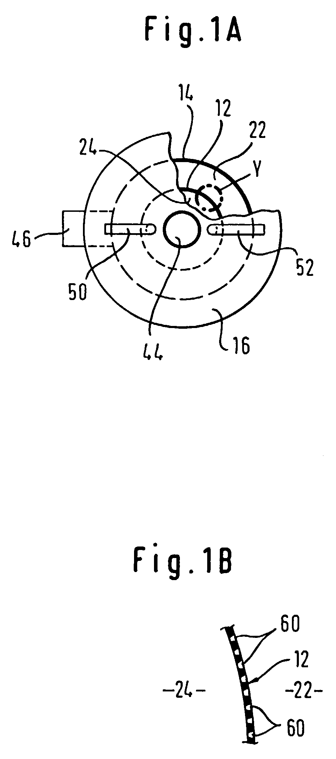

Fig. 1 zeigt die Filtervorrichtung, die allgemein mit Referenzziffer 10 bezeichnet ist, in einer schematischen Darstellung, wobei die wesentlichen Elemente in einer Schnittansicht dargestellt sind.

Der Hauptbestandteil der Filtervorrichtung 10 ist eine Filtereinrichtung 11 mit einer Filtertrommel, die aus einem Filtermantel 12 besteht, der von einem Außenmantel 14 umgeben ist. Der Außenmantel 14 wie auch der Filtermantel 12 sind oben mit Hilfe eines Deckels 16 verschlossen, der gegen einen Befestigungsflansch 18 des Außenmantels 14 befestigt und abgedichtet wird. Der Deckel 16 läßt sich nach dem Lösen bzw. Abkoppeln der später eingehender beschriebenen Anschlußleitungen leicht entnehmen, so daß ein schneller Zugang zu den wesentlichen Elementen der Filtervorrichtung gewährleistet ist. Filtermantel 12, Außenmantel 14, Deckel 16 wie auch der Befestigungsflansch 18 sind bevorzugt aus Metall, insbesondere rostfreier Stahl, gefertigt. Der Filtermantel ist als Spaltsieb, Schlitzsieb oder aber auch als Lochsieb ausgebildet, wie eingehender im Zusammenhang mit der Erläuterung der Fig. 1B dargelegt wird. Im Montagezustand, wie er in Fig. 1 dargestellt ist, liegt der Deckel 16 auf der oberen Stirnseite des Filtermantels 12 auf. Zudem ist der Ringraum zwischen Außenmantel 14 und Filtermantel 12 unten durch einen unteren Deckel 20 abgedichtet, so daß eine Verbindung zwischen dem Inneren des Filtermantels 12 und dem äußeren Ringraum 22 zwischen Filtermantel und Außenmantel nur durch die Durchtrittsöffnungen des als Spalt- Schlitz- oder Lochsieb ausgeführten Filtermantels hindurch stattfinden kann.

Der durch den Filtermantel umschlossene Raum 24, in dem sich, wie später beschrieben wird, die zu entwässernden bzw. bereits entwässerten Nahrungsmittelabfälle ansammeln, ist nach unten durch ein Ventil 26 abgeschlossen, das in geeigneter Weise an der Filtervorrichtung befestigt ist, z.B. durch eine Verschraubung mit dem Deckel 20 und die Austrittsöffnung 25 öffnen oder verschließen kann. Das Ventil 26 ist vorzugsweise als pneumatisches Schieberventil ausgeführt, weil sich durch die pneumatische Betätigung ein sehr rasches Öffnen und Schließen des Ventils erreichen läßt. Dies ist, wie später beschrieben wird, für den Betrieb der Vorrichtung sehr vorteilhaft.

Das Ventil 26 verbindet den Raum 24 innerhalb des Filtermantels 12 mit einem geeigneten Entsorgungsbehälter 28, der wie im dargestellten Beispiel die Form eines Tanks (angedeutet) besitzen kann, aber auch ein Kunststoffsack sein kann. Wenn das Schieberventil 26 geöffnet ist, fallen somit die im Raum 24 befindlichen Nahrungsmittelabfälle unter der Wirkung der Schwerkraft in Pfeilrichtung A in den Entsorgungsbehälter 28.

Die zu verarbeitenden Suspensionen, die insbesondere wässerige oder pastöse Nahrungsmittelabfälle in Wasser sind, befinden sich zunächst in einem Pufferbehälter 30, der einen Einfüllstutzen 32 besitzt, in den in Pfeilrichtung B die zu entwässernden Suspensionen in den Pufferbehälter 30 gelangen. Zusätzlich ist in Fig. 1 ein Überlauf 34 dargestellt. Während der Pufferbehälter 30 in erster Linie dazu dient, einen absatzweisen Betrieb der Filtereinrichtung 11 zu gestatten, indem zum einen die diskontinuierlich zugeführten Nahrungsmittelabfälle zwischengelagert werden und zum anderen die diskontinuierlichen Filtrier- und Entladeschritte der Filtereinrichtung 11 ermöglicht werden, dient der Pufferbehälter zusätzlich dazu, durch die Schwerkraftabscheidung der zu entwässernden Nahrungsmittelabfälle bereits eine erste Eindickung herbeizuführen, bevor die Suspension im Bereich ihrer größten Dichte, d.h. am tiefsten Punkt des Pufferbehälters 30, durch den Auslaß 36 diesen in Richtung der Filtereinrichtung 11 verläßt.

Nach dem Austritt aus dem Pufferbehälter 30 wird die zu entwässernde Suspension durch eine Strömungsleitung 38 einer Suspensionspumpe 40 zugeführt, die ein Fest-Flüssig-Gemisch der gewünschten Konsistenz fördern kann. Derartige Pumpen sind in der Technik gut bekannt und werden insbesondere auch in der Papierindustrie eingesetzt. Der Ausgang der Suspensionspumpe 40 ist mit dem Einlaß 44 in die Filtereinrichtung 11 verbunden, wobei in dem zwischen der Suspensionspumpe 40 und dem Einlaß 44 liegenden Strömungskanal ein Rückschlagventil 42 angeordnet ist. Der Einlaß 44 ist in abdichtender Weise mit dem Deckel 16 der Filtereinrichtung verbunden und leitet die zu entwässernde Suspension in den Raum 24, der vom Filtermantel 12 umschlossen wird.

Bei geschlossenem Ventil 26 sammeln sich die aus dem Pufferbehälter 30 in die Filtervorrichtung 10 eingeleiteten festen Nahrungsmittelabfälle im Raum 24 innerhalb des Filtermantels 12 an, während das Wasser sowie kleine Partikel, deren Größe den Durchtritt durch den Filtermantel 12 gestattet, in den äußeren Ringraum 22 zwischen Filtermantel 12 und Außenmantel 14 gelangen können. Der Außenmantel ist mit einem Flüssigkeitsaustritt 46 versehen, durch den das weitgehend gereinigte Wasser als sogenanntes Grauwasser abgeführt und einer weiteren Behandlung zugeleitet wird. Der Flüssigkeitsaustritt 46 läßt sich in geeigneter Weise mit einem Absperrventil 48 verschließen.

Wie in Fig. 1 zusätzlich dargestellt ist, befinden sich im Deckel 16 neben dem Einlaß 44, der mit dem Raum 24 im Filtermantel 12 kommuniziert, zusätzlich eine Anschlußleitung 50 für Druckluft sowie eine Anschlußleitung 52 für Reinigungsflüssigkeit. Beide Anschlüsse 50 und 52 sind jeweils mit einem geeigneten Absperrventil 54 bzw. 56 versehen.

Schließlich befindet sich in der Strömungsleitung zwischen dem Rückschlagventil 42 und dem Einlaß 44 ein Drucksensor 58, der zur Steuerung und Regelung der Vorrichtung dient.

Fig. 1A zeigt die Ansicht X in Fig. 1. Dabei sind entsprechende Bauteile mit den entsprechenden Referenzziffern der Fig. 1 bezeichnet. Wie insbesondere aus demjenigen Bereich ersichtlich ist, in dem der Deckel 16 aufgebrochen wurde, umgibt der äußere Ringraum 22 den Raum 24, der von dem Filtermantel 12 umgeben ist. Durch den Deckel sind sowohl der Einlaß 44 für die zu behandelnde Suspension als auch die Anschlußleitungen 50 und 52 für Druckluft sowie Reinigungsflüssigkeit dargestellt. All diese Anschlußleitungen münden in den Raum 24. Der äußere Ringraum 22 besitzt somit lediglich den Flüssigkeitsaustritt 46, nicht jedoch einen gesonderten Einlaß; vielmehr steht der äußere Ringraum 22 nur durch den Filtermantel 12 hindurch mit dem Einlaß 44 sowie den Anschlußleitungen 50 und 52 in Verbindung.

Fig. 1B zeigt den in Fig. 1A mit Y bezeichneten Ausschnitt aus dem Filtermantel 12. Wie aus Fig. 1B deutlich wird, besteht der Filtermantel aus einem dünnen Mantel, vorzugsweise aus Metall, in dem sich Durchtrittsöffnungen 60 befinden. Fig. 1B zeigt, daß die Durchtrittsöffnungen des als Spaltsieb oder Schlitzsieb ausgeführten Filtermantels 12 sich von der Innenseite, die den Raum 24 begrenzt, zur Außenseite hin, die den äußeren Ringraum 22 begrenzt, erweitern. Diese spezielle Formgebung der Durchtrittsöffnungen besitzt, wie nachfolgend erläutert wird, den Vorteil, daß während des Entleerungsvorgangs der Filtervorrichtung 10 unter Verwendung von Druckluft der Anteil der vom Raum 24 in den äußeren Ringraum 22 gepreßten Feststoffpartikel möglichst gering gehalten wird. Die Durchtrittsöffnungen 60 besitzen einen geringsten Öffnungsquerschnitt von 0,25 bis 0,5 mm und vorzugsweise von etwa 0,4 mm. Dieser geringste Öffnungsquerschnitt hat sich für vorzerkleinerte Nahrungsmittelabfälle als sehr geeignet erwiesen, doch kann die Filtervorrichtung für Suspensionen je nach Anwendungszweck selbstverständlich auch andere geeignete Öffnungsgeometrien (z.B. Lochblech) und Abmessungen besitzen.

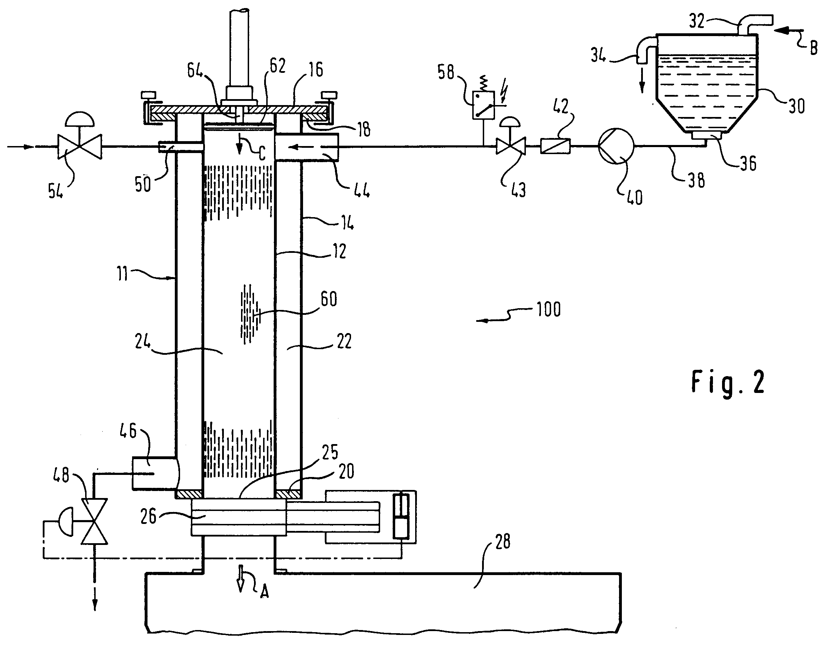

Bevor eine zweite Ausführungsform anhand der Fig. 2 erläutert wird, soll im folgenden die Funktion der Vorrichtung gemäß Fig. 1 beschrieben werden.

Ein vollständiger Betriebszyklus der Vorrichtung beginnt damit, daß durch den Auslaß 36 des Pufferbehälters 30 die zu behandelnde Suspension, insbesondere wässerige oder pastöse Nahrungsmittelabfälle, in die Suspensionspumpe 40 und anschließend durch das Rückschlagventil 42 in den Einlaß 44 der Filtereinrichtung 11 gefördert werden. Der Einlaß 44 steht mit dem Raum 24 im Inneren des Filtermantels 12 in Verbindung. Das pneumatische Schieberventil 26 ist geschlossen und die Suspension gelangt somit in den durch vom Filtermantel 12 umschlossenen Raum 24, in dem sich die Feststoffpartikel ansammeln, während die wässerigen Bestandteile, d.h. Wasser sowie auch feste und pastöse Bestandteile, die durch den Filtermantel 12 hindurchtreten können, in den Ringmantel 22 gelangen und anschließend durch den Flüssigkeitsaustritt 46 und das geöffnete Absperrventil 48 in einen Grauwassertank oder eine andere geeignete Verfahrensstufe abgeführt werden. Während dieses Arbeitsschrittes sind sowohl das Absperrventil 56 für die Anschlußleitung für Reinigungsflüssigkeit als auch das Absperrventil 54 für die Anschlußleitung für Druckluft geschlossen. Der Drucksensor 58 mißt den Druck in der Zuleitung zum Einlaß 44, der den Druckverlust zwischen dem Raum 24 im Inneren des Filtermantels sowie dem äußeren Ringraum 22, der nahe an dem atmosphärischen Druck liegt, wiedergibt.

Mit zunehmendem Einführen der zu behandelnden Suspension bildet sich ein Feststoffpfropf im Raum 24, der auch durch sein Eigengewicht nach unten hin zunehmend entwässert wird. Je höher die Oberkante dieses Pfropfes im Inneren des Filtermantels 12 ist, desto mehr Durchtrittsöffnungen des Filtermantels sind verstopft und desto höher wird der Druckverlust zwischen dem Raum 24 innerhalb des Filtermantels sowie dem äußeren Ringraum 22. Wie oben erwähnt wurde, wird dieser Druckverlust in Form eines erhöhten Druckes in der Zuleitung zum Einlaß 44 durch den Drucksensor 58 aufgenommen. Daher läßt sich feststellen, wann sich in der Filtereinrichtung 11 eine gewünschte Menge an abzuscheidendem Feststoff angesammelt hat. Bei Überschreiten eines vorgegebenen Druckes gibt der Drucksensor 58 ein Signal ab und der anschließende Entleerungsvorgang kann entweder automatisch oder von Hand ausgeführt werden.

Hierzu wird zunächst die Suspensionspumpe 40 angehalten sowie das Absperrventil 48 für den Flüssigkeitsaustritt 46 und ein gasdichtes Ventil 43, das ein Entweichen von Druckluft durch die Pumpe 40 in den Pufferbehälter 30 verhindert, geschlossen. Anschließend wird das Absperrventil 54 in der Anschlußleitung für Druckluft geöffnet und Druckluft gelangt durch die Anschlußleitung 50 in den von dem Filtermantel 12 umschlossenen Raum 24. Als möglicher, geeigneter Druck hat sich ein Luftdruck von 6 bar als geeignet erwiesen. Durch die verbleibenden, d.h. nicht verstopften Durchtrittsöffnungen gelangt die Druckluft zusätzlich in den äußeren Ringraum 22, so daß sich dort ebenfalls der gewünschte, erhöhte Druck einstellt. Nach Erreichen eines gleichmäßigen, erhöhten Druckniveaus in der Filtereinrichtung 11, d.h. sowohl im Raum 24 wie auch äußeren Ringraum 22, wird das Ventil 26 geöffnet und der im Raum 24 befindliche Feststoffpfropfen unter der schiebenden Wirkung der plötzlichen Druckentspannung in der Filtereinrichtung 11 in den Entsorgungsbehälter 28 ausgestoßen. Hierbei strömt insbesondere die im äußeren Ringraum 22 befindliche Druckluft durch den Filtermantel 12 hindurch in den Raum 24, wobei sich durch die in Fig. 1B gezeigte geringere Querschnittsfläche der Sieböffnungen an der Innenseite des Filtermantels 12 in diesem Bereich eine erhöhte Strömungsgeschwindigkeit einstellt, die insbesondere die im Bereich der Durchtrittsöffnungen 60 angelagerten Feststoffbestandteile wirkungsvoll vom Filtermantel 12 löst. Während des Ausstoßvorganges ist das Absperrventil 54 für die Druckluftzufuhr bereits wieder geschlossen.

Anschließend wird das Schieberventil 26 wieder geschlossen, das Absperrventil 48 für den Flüssigkeitsaustritt 46 geöffnet und nach dem Öffnen des gasdichten Ventils 43 der Betrieb der Suspensionspumpe 40 wieder aufgenommen. Der oben beschriebene Filter- und Entwässerungsschritt beginnt von neuem.

Wie oben bereits angedeutet wurde, lassen sich die Ventile 54, 48 sowie das Schieberventil 26 wie auch die Suspensionspumpe 40 in Abhängigkeit von dem im Drucksensor 58 aufgenommenen Druck mittels einer geeigneten Regelungsvorrichtung automatisch betreiben.

Die zusätzlich in Fig. 1 gezeigte Anschluß- und Einlaßmöglichkeit für Reinigungsflüssigkeit dient der turnusgemäßen Reinigung der Filtervorrichtung, wird aber beim oben beschriebenen zyklischen Betrieb nicht betätigt.

Fig. 2 zeigt eine weitere Ausführungsform der erfindungsgemäßen Filtervorrichtung, wobei gleiche bzw. korrespondierende Bauelemente mit denselben Referenzziffern wie in Fig. 1 bezeichnet sind. Auf diese Bauelemente wird im folgenden nicht nochmals gesondert eingegangen werden, sofern sich ihre Funktion nicht von der oben beschriebenen unterscheidet.

Der wesentliche Unterschied zu der in Fig. 1 dargestellten Vorrichtung liegt darin, daß sich der Einlaß 44 für die zu behandelnde Suspension sowie die Anschlußleitung 50 für Druckluft seitlich befinden, d.h. durch den Außenmantel 14 hindurchtreten und in den Filtermantel 12 eingeführt sind, und im Deckel 16 eine mechanische Verdichtungseinrichtung in Form eines pneumatischen Preßkolbens 62 befestigt ist. Der Einlaß für Reinigungsflüssigkeit ist in Fig. 2 nicht dargestellt, kann aber, wie auch die Anschlußleitung 50 für Druckluft, seitlich durch den Außenmantel 14 hindurchtreten und mit dem Filtermantel 12 verbunden sein. Der Preßkolben 62 wird mit Hilfe einer Kolbenstange 64 pneumatisch betätigt. Der Preßkolben 62 besitzt einen Querschnitt, der der Querschnittsform des Raumes 24 entspricht, so daß der Preßkolben 62 bei der Betätigung der Kolbenstange 64 an der Innenseite des Filtermantels 12 entlanggeführt wird. Der Preßkolben 62 dient dazu, eine zusätzliche Entwässerung der im Raum 24 befindlichen, zu behandelnden Suspensionen herbeizuführen.

Der Betrieb der in Fig. 2 dargestellten Filtervorrichtung 100 unterscheidet sich von der in Fig. 1 dargestellten Vorrichtung nur dadurch, daß nach dem Schritt des Einführens der zu behandelnden Suspension durch den Einlaß 44 in den Raum 24 und dem Erreichen eines vorgegebenen Druckverlustes zwischen äußerem Ringraum 22 und dem Raum 24 (gemessen vom Drucksensor 58) vor dem oben beschriebenen Schritt des Ausstoßens der Feststoffe ein zwischengeschalteter Komprimierungsschritt stattfindet.

Hierzu bleibt das Absperrventil 48 am Flüssigkeitsaustritt 46 geöffnet, während die Suspensionspumpe 40 angehalten wird, ein gasdichtes Ventil 43 geschlossen wird und das Absperrventil 54 für die Druckluft ebenfalls noch geschlossen bleibt.

Anschließend wird durch die Betätigung der Kolbenstange 64 der Preßkolben 62 in Pfeilrichtung C bewegt, bis sich in dem bereits innerhalb des Filtermantels 12 befindlichen Feststoffpfropfen ein gewünschter Komprimierungs- bzw. Entwässerungsgrad eingestellt hat. Die hierzu erforderliche Hubbewegung der Kolbenstange 64 kann entweder aus Betriebserfahrungen gewonnen werden oder auch durch die Regelung des zur Betätigung des Preßkolbens aufgebrachten hydraulischen Drucks geschehen. Nachdem der gewünschte Komprimierungs- und Entwässerungsgrad erzielt wurde, wird das Absperrventil 48 für den Flüssigkeitsaustritt 46 geschlossen und, wie oben beschrieben wurde, das Absperrventil 54 in der Anschlußleitung für Druckluft geöffnet. Nachdem sich, wie im Zusammenhang mit dem Betrieb der Vorrichtung 10 beschrieben wurde, der gewünschte, erhöhte Druck in der Filtervorrichtung 10 eingestellt hat, wird wiederum das Ventil 26 geöffnet und der Feststoffpfropfen unter Zuhilfenahme der abwärts gerichteten Bewegung des Preßkolbens in den Entsorgungsbehälter 28 entleert. Es ist von Vorteil, wenn sich das Ventil 26 sehr schnell öffnet, damit sich während des Öffnungsvorganges der Druck in der Filtereinrichtung 11 nicht bereits zu stark entspannt. Bei diesem Arbeitsschritt ist wiederum das Absperrventil 54 für die Druckluft geschlossen und der erhöhte Druck entspannt sich vom äußeren Ringraum 22 durch die Durchtrittsöffnungen hindurch in den Entsorgungsbehälter 28, wobei die an den Durchtrittsöffnungen anhaftenden Feststoffteile vom Filtermantel 12 gelöst werden.

Auch beim Betrieb der Vorrichtung 100 können die Ventile 54, 43, 48 sowie 26 über eine geeignete Regelungsvorrichtung mit dem Drucksensor 58 betriebsmäßig verbunden werden.

Die erfindungsgemäße Vorrichtung besitzt den Vorteil, daß sie sehr einfach aufgebaut ist und insbesondere sehr wenig bewegte Teile besitzt. Eine geeignete Entwässerung von Suspensionen kann direkt an den Entsorgungsbehälter gekoppelt werden und mit Hilfe eines sehr einfachen Verfahrens betrieben werden. Die erfindungsgemäße Vorrichtung kann anstelle der sehr viel komplexer aufgebauten Wasserpressen eingesetzt werden und als eine vorgeschaltete Grob-Filterstufe die Standzeit einer nachgeschalteten Filtriereinheit erhöhen. Im Falle der zusätzlichen Verwendung eines Preßkolbens läßt sich zudem auch bei unterschiedlicher Konsistenz der zu filtrierenden Suspensionen ein gleichmäßiger Entwässerungsgrad erzielen.

## Patentansprüche

1. Filtervorrichtung (10) für Suspensionen, insbesondere zum Entwässern von wässerigen oder pastösen Nahrungsmittelabfällen, umfassend eine Filtervorrichtung (11) mit
- einem Filtermantel (12) mit Flüssigkeitsdurchtrittsöffnungen (60); und
- einer Eintrittsöffnung (44) für die zu behandelnde Suspensionen; und
- einer Austrittsöffnung (25) für feste Filterrückstände.
dadurch **gekennzeichnet,** daß
der Filtermantel (12) von einem geschlossenen Außenmantel (14) umgeben ist, der mit einem Flüssigkeitsaustritt (46) versehen ist.

2. Filtervorrichtung nach Anspruch 1, dadurch gekennzeichnet, daß die Austrittsöffnung (25) für feste Filterrückstände mit einem betätigbaren Ventil (26) verschließbar ist.

3. Filtervorrichtung nach Anspruch 2, dadurch gekennzeichnet, daß das Ventil (26) ein Schieberventil ist, das pneumatisch betätigbar ist.

4. Filtervorrichtung nach einem der vorhergehenden Ansprüche, dadurch gekennzeichnet, daß der Filtermantel (12) im wesentlichen zylindermantelförmig ausgebildet ist; und in Form eines Spaltsiebes oder Schlitzsiebes ausgestaltet ist.

5. Filtervorrichtung nach Anspruch 4, dadurch gekennzeichnet, daß die Flüssigkeitsdurchtrittsöffnungen (60) im Filtermantel einen geringsten Öffnungsquerschnitt von 0,25 mm bis 0,5 mm und vorzugsweise von etwa 0,4 mm besitzen.

6. Filtervorrichtung nach Anspruch 4 oder 5, dadurch gekennzeichnet, daß die Flüssigkeitsdurchtrittsöffnungen (60) auf der Innenfläche des Filtermantels (12) einen geringeren Öffnungsquerschnitt besitzen als auf der Außenfläche des Filtermantels.

7. Filtervorrichtung nach einem der vorhergehenden Ansprüche, dadurch gekennzeichnet, daß die Filtereinrichtung (11) einen Einlaß (52) für Reinigungsflüssigkeit aufweist.

8. Filtervorrichtung nach einem der vorhergehenden Ansprüche, dadurch gekennzeichnet, daß die Filtereinrichtung (11) einen Einlaß (50) für Druckluft aufweist.

9. Filtervorrichtung nach einem der vorhergehenden Ansprüche, dadurch gekennzeichnet, daß die Eintrittsöffnung (44) für die zu behandelnde Suspension mit einer Zufuhrleitung verbunden ist; und
in der Zufuhrleitung eine Pumpe (40) angeordnet ist.

10. Filtervorrichtung nach Anspruch 9, dadurch gekennzeichnet, daß ein Drucksensor (58) in der Zufuhrleitung oder Eintrittsöffnung (44) angeordnet ist.

11. Filtervorrichtung nach einem der vorhergehenden Ansprüche, dadurch gekennzeichnet, daß eine mechanische Verdichtungseinrichtung (62, 64) in dem vom Filtermantel umschlossenen Raum bewegbar angeordnet ist.

12. Filtervorrichtung nach Anspruch 11, dadurch gekennzeichnet, daß die mechanische (62) Verdichtungseinrichtung ein pneumatischer Preßkolben ist.

13. Filtervorrichtung nach einem der vorhergehenden Ansprüche, dadurch gekennzeichnet, daß die Filtereinrichtung (11) mit einem abnehmbaren Deckel (16) verschließbar ist.

14. Verfahren zum Entwässern von Suspensionen in einer Filtervorrichtung, umfassend eine Filtereinrichtung mit
- einem Filtermantel mit Flüssigkeitsdurchtrittsöffnungen und einer Eintrittsöffnung für die zu behandelnden Suspensionen;
- einer Austrittsöffnung für feste Filterrückstände;
- einem geschlossenen Außenmantel, der den Filtermantel umgibt und einen Flüssigkeitsaustritt besitzt;
umfassend die folgenden Schritte:
- Einführen der Suspension in den vom Filtermantel umschlossenen Raum;
- Abführen von Flüssigkeit aus dem Außenmantel; und
- absatzweises Öffnen der Austrittsöffnung und Entleeren der Filterrückstände aus dem vom Filtermantel umschlossenen Raum.

15. Verfahren nach Anspruch 14, zusätzlich umfassend den Schritt:
- Fördern der Suspension mit einer Pumpe vor dem Einführen in die Filtereinrichtung.

16. Verfahren nach einem der Ansprüche 14 oder 15, zusätzlich umfassend die Schritte:
- Messen des Druckes im Einlaßbereich der Suspension in die Filtereinrichtung; und
- Regeln des absatzweisen Öffnens der Austrittsöffnung in Abhängigkeit vom Druck.

17. Verfahren nach einem der Ansprüche 14 bis 16, zusätzlich umfassend die Schritte:
- Einblasen von Druckluft in die Filtereinrichtung vor und während des Öffnens oder Geöffnethaltens der Austrittsöffnung; und gleichzeitig
- Schließen des Flüssigkeitsaustritts.

18. Verfahren nach einem oder mehreren der Ansprüche 14 bis 17, zusätzlich umfassend den Schritt:
- mechanisches Verdichten der Filterrückstände in der Filtereinrichtung vor dem Entleeren.

19. Verfahren nach Anspruch 18, weiter umfassend die Schritte:
- Messen des Betätigungsdruckes einer pneumatisch betätigten Verdichtungseinrichtung zum mechanischen Verdichten der Filterrückstände; und
- Regeln des absatzweisen Öffnens der Austrittsöffnung in Abhängigkeit vom gemessenen Druck.
